# EUROPEAN PATENT APPLICATION

(11) **EP 1 335 557 A1**
(43) Date of publication of application: **13.08.2003**
(21) Application number: 02075550.0
(22) Date of filing: 11.02.2002
(51) Int. Cl.: H04L 29/06, H04L 12/24, H04L 12/26, G06F 1/00

(54) **Method for computer network intrusion detection using pattern matching**

(71) Applicant: Koninklijke KPN N.V., 9726 AE Groningen (NL)
(72) Inventor: Gelbord, Boaz Simon, 1018 VV Amsterdam (NL)
(74) Representative: Prins, Adrianus Willem

(57) **Abstract**

Method for monitoring activities of a computer network. Network activities are converted into a network activity graph G. which is investigated, by monitoring means (4,5,6) whether one or more subgraphs of the network activity graph G matches with a "misuse" graph H. If the number of occurences of graph H as a subgraph of G is under a certain threshold value t, then check and report the occurences of matching attributes. If, however, d is too high, then executed one or more times an attribute investigation loop in, which the attribute A which occurs the least number of times is converted into a planar graph P having k vertices, not being isomorphic to any subgraph of G and k being the minimal number of vertices having that property. A network activity graph G and a misuse graph H are modified by affixing planar graph P to the nodes of both graphs containing attribute A. Execution of the loop is repeated until the number of the occurrences of H' as a subgraph of G' is under a certain threshold value t, after which matching of (modified) graph H and G are checked and repoted. This pattern, matching method, which uses subgraph isomorphism, is suitable for efficient virus and intrusion detection in large-scale computer networks.

## Description

### Field of the Invention

The invention refers to a method for pattern matching e.g. in intrusion detection systems.

### Background of the Invention

As an increasing part of everyday and corporate life goes online, the issue of computer and information security has gained importance and prominence. One of the integral techniques used in recent years to thwart attacks on computer networks is the use of so-called intrusion detection systems. Intrusion detection systems rely on the analysis of network traffic to determine whether someone is trying to compromise the security of a networked entity.

An intrusion detection system compares current network traffic against a set of known inappropriate usages, and checks for a match. The method relies on the ability to efficiently match between the patterns, even when the network being analyzed is large and complex. This complexity often restricts the efficiency of this method, and impairs its ability to thoroughly conduct the analysis.

Advanced methods may apply graph based intrusion detection. Algorithms for graph isomorphism are applied on graphs associated to instances of network activity. One example of such graphical intrusion detection system is known from Eppstein D, Planar Subgraph

Isomorphism, J. Graph Alg. Appl., V3(3) pp1-27, 1999. The system aims to detect large-scale automated attacks on networked systems. The approach is to build activity graphs reflecting activity in a network, and then to analyze these graphs to assess whether an attack is occurring. In the known graphical intrusion detection system the nodes or vertices of the activity graph represent hosts in a system, while edges on the graph represent network activity between the hosts. Both the nodes and the edges of an activity graph have the property that they may have attributes associated with them, which provide additional information regarding the nature of the host or connection. Thus, for example, if a particular instance of traffic between two hosts contains the transfer of password files, this fact could be duly noted as an attribute on the corresponding edge.

One of the primary challenges is to determine whether network activities are related and therefore whether such activity should be recorded on the same graph. For doing so, known graphical intrusion detection systems contain a set of aggregation rules. These rules dictate how to build larger graphs from smaller ones.

### Summary of the Invention

The present invention is, among others, based on the fact that a graphical intrusion detection system requires the identification of a smaller graph with certain attributes as a subgraph of a larger graph with its own attributes.

A graph consists of a set of nodes or vertices, which are connected by edges. Two graphs of the same number of vertices are said to be isomorphic if there is a mapping between the respective sets of vertices which preserves the edges. A subgraph of G is a subset of the vertices of G with the corresponding edges. A network activity graph G is said to be planar if it can be drawn in the plane without any edges intersecting (except at vertices).

The subgraph isomorphism problem asks the following: given two graphs G and H, is there an isomorphism of H to some subgraph of G. The question of subgraph isomorphism is of interest not only in intrusion detection systems but also in other areas where pattern matching is relevant. The issue of planar isomorphism for a variety of patterns and situations has been studied extensively.

Supposed that an intrusion detection system has generated an activity graph G, for example as described in Eppstein. Suppose that there is a set of graphs H_1, H_2,..., H_k which have been identified as being reflective of possible misuse or intrusion of the network. Now with the activity and the misuse pattern graph there are also associated a number of characteristics. Such characteristics include a wide variety of different parameters; for example domain source, host source, destination, etc. These attributes are represented on the nodes, edges, and graphs themselves through a language described in the particular intrusion detection system being used.

Now suppose that a network activity graph G has to be investigated whether a misuse graph H is contained as a subgraph of G. There is with each node and each edge of both G and H associated a series of attributes. Thus as graphs it may be the case that G contains a subgraph isomorphic to H but that this does not reflect a misuse pattern because the corresponding attributes differ. Indeed, the smaller the graph H the more likely this is to occur; many legitimate network activities become suspicious only when certain attributes are associated to them, such as the type of files being transferred etc.

The method for pattern matching according to the present invention may comprise next steps:
- Find the number of occurrences of H as a subgraph of G (e.g. using techniques known as such from Eppstein); call this number d.
- If d is under a certain threshold value, then check the occurrences of matching attributes.
- If d is above said threshold value then execute next attribute investigation steps:
   - Select the attribute that occurs the least number of times; call this attribute A.
   - Create a new network activity graph G', obtained from G by affixing to the nodes containing the attribute A a new graph P, being a planar graph on k vertices, not being isomorphic to any subgraph of G and k being the minimal number of vertices with this property.
   - Create a new graph H' in a similar manner from H.
   - Find the number of the occurrences of H' as a subgraph of G'; let this number become d.
- If d is under a certain threshold value, then check the occurrences of matching attributes.
- If d is still above said threshold value then execute the above attribute investigation steps selecting, in the first attribute investigation step, the least frequent attribute in the modified graphs G' and H'; let that attribute become attribute A. In other words: if d is still above said threshold value t then re-execute the attribute investigation process, however, using now the modified graphs G' and H' replacing original graphs G and H respectively. The attribute investigation is re-executed as many times as nessecary until d is under the threshold value, after which the occurrences of matching attributes can feasibly be checked.

One aspect of the above method is to embed the attributes within a planar graph so as to be able to exploit results on planar graphs. This is done by reducing the matching problem to the subgraph isomorphism problem in such a way that the number of nodes does not become too large, viz. restricted by a threshold value, in correspondence with the system's resources: if d is too large then the running time for execution of the method will be too long.

For certain patterns H (such as small cycles, trees, and so forth), the algorithm can directly call the sub-algorithm because it will be clear that the number of occurrences of H as a subgraph of G is too large so as to complete an exhaustive search. As well, for cases in which the range of possible attributes is limited, it may be more economical to use existing algorithms for the isomorphism of sub-graphs in weighted graphs.

The invention may be implemented in software running on a client computer or in a distributed architecture. The invention may also be implemented in hardware.

Finally, a prior art method for building a graph-based intrusion detection systems is disclosed in Cheung S et al, The Design of GrIDS: A Graph-Based Intrusion Detection System, http://seclab.cs.ucdavis.edu /arpa/grids, while the use of pattern-matching in intrusion detection systems is discussed in Kumar S; Spafford E, An Application of Pattern Matching in Intrusion Detection, Tech. Rep. 94-013, Purdue Un., Dep. Comp. Sc., March 1994. Neither prior art method discloses or suggests expanding matching (sub)graphs by planar graphs, substituting least occurring node attributes, like in the present invention. This measures, specified more in detail above and discussed in next chapter, results in advanced, high-speed monitoring capabilities, fit for modern computer networks.

### Brief Description of the Drawings

Figure 1 shows a computer network, connecting several servers and terminals and comprising network monitoring means.
Figure 2 shows a small part of a network activity graph G of an active computer network, showing nodes and edges which represent the various network activities.
Figure 3 shows a "misuse graph" H, being the graph of a -a priori known- unwanted network activity, e.g. a network intrusion attack.
Figure 4 shows the result of conversion of a node attribute by affixing a new planar graph, calculated from the original node attributes.
Figure 5 shows the adaptation of the network activity graph G after conversion one relevant node attribute into a planar graph, expanding the original graph and representing the node's attributes.
Figure 6 shows the adaptation of the "misuse graph" H by expanding the relevant node by a planar graph representing the node's attributes.

### Detailed Description of the Drawings

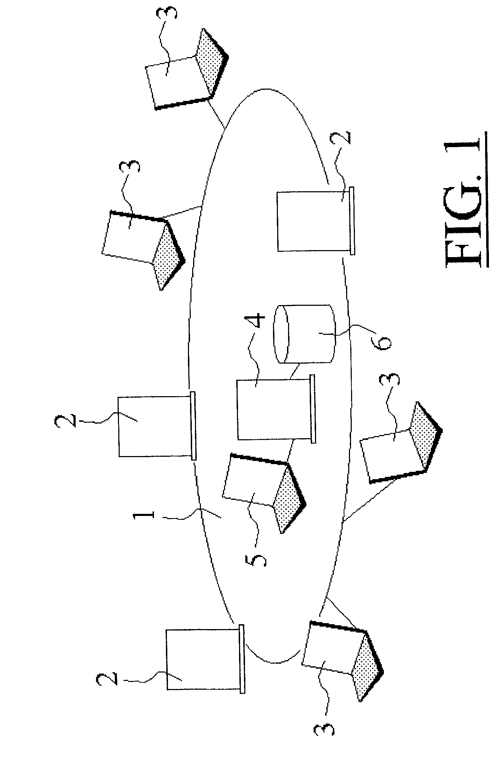

Figure 1 shows a computer network 1, connecting several servers 2 and terminals 3. The network 1 comprises a network monitoring server 4, including a monitoring terminal 5. The monitoring server comprises hardware and software modules which are fit for monitoring all network traffic and activities within the network, including the network traffic between the servers 2 and terminals 3. The hardware and software of monitoring server 4 is enabled for converting all network activities into a graph representation G. A database 6 comprises graphs representing (known) unwanted network activities, like network intrusion. Monitor server 4 continuously matches the current network activity graph with graphs representing unwanted network activities ("misuse graphs").

Figure 2 shows part of the network activity graph G of the computer network 1, comprising subgraphs, nodes and edges which, together with their attributes (not labeled extensively), represent various network activities. The kind of node attributes are represented by node labels a, b, c etc.

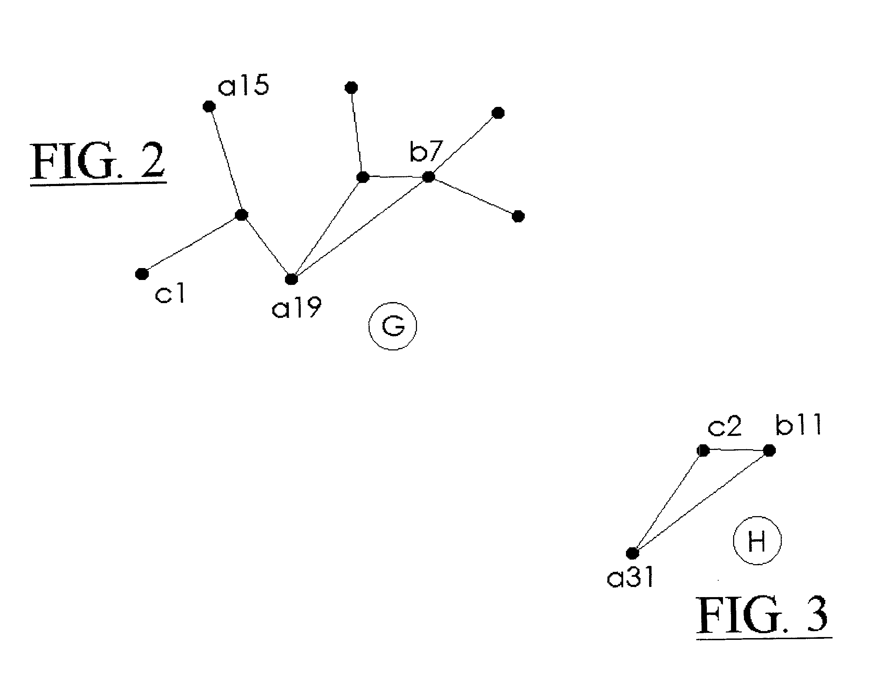

Figure 3 shows one (very simplified) misuse graph H, derived from database 6. Graph H includes node attributes classes a, b and c.

The network 1 is monitored, by monitoring server 4, by monitoring its (current) network activity graph G and investigating whether one or more of its subgraphs matches with graph H, representing certain unwanted network sub-activities. As said before, the nodes and/or edges of said graphs and/or subgraphs may comprise one or more attributes.

The network monitor 4 is loaded with software and/or hardware which is fit to find, by matching graphs G and H, the number of occurrences of graph H as a subgraph of G, calling this number d.

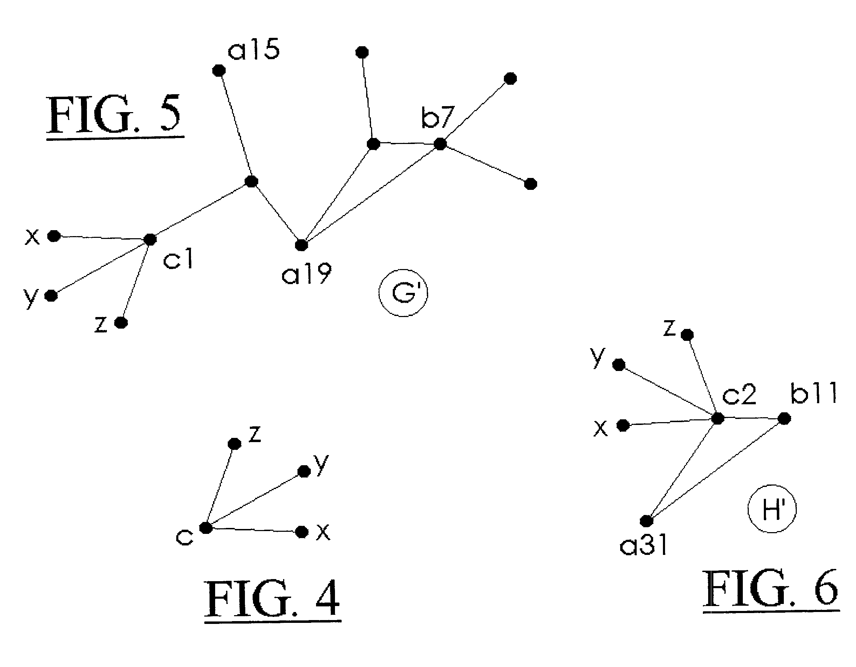

If d is under a certain threshold value t, which threshold value t e.g. may be stored in database 6, then monitor server 4 reports the occurrences of matching attributes to monitor terminal 5. If, however, the hardware and/or software of monitor server 4 calculates that the number of occurrences of graph H as a subgraph of G, that is the value of d, is more than threshold value t then the hardware or software of monitor server 4 executes next attribute investigation steps, which is illustrated in figures 4 to 6.
i. find which attribute, in the relevant matching (sub)graph, occurs the least number of times and call this attribute A; this is the attribute of node c1 of network activity graph G (figure 2), matching with the attribute of node c2 of misuse graph H (figure 3).
ii. generate, based on the relevant node attribute -to be calculated by the hardware and/or software of monitor server 4-, an planar graph P (illustrated in figure 4) on k vertices, not being isomorphic to any subgraph of G and k being the minimal number of vertices having that property;
iii. create a new network activity graph G' (illustrated in figure 5), obtained from network activity graph G by affixing to the nodes containing the attribute A said planar graph P;
iv. create a new graph H' (illustrated in figure 6), obtained from graph H by affixing to the nodes containing the attribute A said planar graph P;
v. find the number of the occurrences of new graph H' as a subgraph of new network activity graph G' and let this number become d;
vi. if d is under threshold value t, then check and report the occurrences of the matching attributes to monitor terminal 5;
vii. if the number of matching occurrences, value d, is still above threshold value t then execute again the above attribute investigation steps i. to vi. The modified graphs G' and H' are renamed to graphs G and H respectively (in other words, graphs G' and H' are put into the place of original graphs G and H) and the attribute investigation process steps are executed again. The least frequent attribute in the modified graphs G' and H' (renamed now to graphs G and H), to be found in the (repeated) first attribute investigation step i. is set to attribute A and the steps ii. to vii. are executed until the moment that the value for d, the matching occurrences, has a value which is below the threshold value t, after which the resulting occurrences are checked and reported to monitor terminal 5, which displays the d occurrences of matching subgraphs of G and misuse graph H, including their attributes.

After having reported, in the way depicted above, the relevant misuse of the network 1, a system operator, alarmed via the monitoring terminal 5, may take measures against further misuse of the computer network 1.

## Claims

1. Method for monitoring activities of a computer network, wherein the network activities are converted into a network activity graph G, comprising various sub-activities, represented by network subgraphs, the network activity graph being investigated whether one or more subgraphs of the network activity graph G matches with a graph H, representing certain wanted or unwanted activities of said network, one or more nodes and/or edges of said graphs and/or subgraphs comprising one or more distinctive attributes, the method comprising next steps:
a. find, by matching graphs G and H, the number of occurrences of graph H as a subgraph of G and call this number d;
b. compare d with a threshold value for discriminating further process steps.

2. Method according to claim 1, comprising next further steps:
a. if d is under a certain threshold value t, then check and report the occurrences of matching attributes;
b. if d is above said threshold value t then execute an attribute investigation process.

3. Method according to claim 2, the attribute investigation process comprising next steps:
a. find which attribute occurs the least number of times and call this attribute A;
b. create a new network activity graph G', obtained from G by affixing to the nodes containing the attribute A a new graph P, being a planar graph on k vertices, not being isomorphic to any subgraph of G and k being the minimal number of vertices having that property;
c. create a new graph H' in the same way from H;
d. find the number of the occurrences of H' as a subgraph of G'; let this number become d;
e. if d is under a certain threshold value, then check and report the occurrences of matching attributes;
f. if d is still above said threshold value t then re-execute the attribute investigation process from step a., however, after renaming graphs G' and H' to graphs G and H respectively.

4. Method according to claim 1, wherein graph H relates to misuse activities of the network like network intrusion, virus activities etc.
